Europäisches Patentamt

European Patent Office

Office européen des brevets

(19)

(11) **EP 1 062 765 B1**

(12) **EUROPÄISCHE PATENTSCHRIFT**

(45) Veröffentlichungstag und Bekanntmachung des Hinweises auf die Patenterteilung:
**18.08.2004   Patentblatt 2004/34**

(51) Int Cl.[7]: **H04L 9/32**

(21) Anmeldenummer: **99913071.9**

(22) Anmeldetag: **16.02.1999**

(86) Internationale Anmeldenummer:
**PCT/DE1999/000415**

(87) Internationale Veröffentlichungsnummer:
**WO 1999/048241 (23.09.1999 Gazette 1999/38)**

(54) **AUTHENTIFIZIERUNG VON SCHLÜSSELGERÄTEN**

AUTHENTICATION OF KEY DEVICES

AUTHENTIFICATION D'APPAREILS CODES

(84) Benannte Vertragsstaaten:
**BE CH DE FR GB LI NL**

(30) Priorität: **16.03.1998   DE 19811318**

(43) Veröffentlichungstag der Anmeldung:
**27.12.2000   Patentblatt 2000/52**

(73) Patentinhaber: **Rohde & Schwarz SIT GmbH**
**12489 Berlin (DE)**

(72) Erfinder:
• **ENTERROTTACHER, Anton**
**D-80639 München (DE)**

• **JAHNEN, Georg**
**D-85716 Unterschleissheim (DE)**

(74) Vertreter: **Körfer, Thomas, Dipl.-Phys.**
**Mitscherlich & Partner,**
**Patent- und Rechtsanwälte,**
**Sonnenstrasse 33**
**80331 München (DE)**

(56) Entgegenhaltungen:
**WO-A-95/14283          WO-A-97/48208**
**FR-A- 2 709 903**

**Beschreibung**

Die Erfindung betrifft ein Verfahren gemäß dem Oberbegriff des Patentanspruchs 1.

Ein solches Verfahren ist im Prinzip in dem Buch von W. Fumy und H.P. Rieß: Kryptographie, Entwurf und Analyse symmetrischer Kryptosysteme R. Oldenbourg Verlag, München Wien, 1988, ISBN 3-486-20868-3, beschrieben.

Bei verschlüsselter Übertragung von Sprache oder allgemeiner von Daten müssen beide Kommunikationspartner über ein gemeinsames Geheimnis verfügen, das Schlüsselwort. Dieses Schlüsselwort ist einem potentiellen Mithörer oder Gegner unbekannt. Eine Möglichkeit hierfür ist ein asymmetrisches Verschlüsselungsverfahren, bei dem Zufallszahlen zwischen den Kommunikationspartnern ausgetauscht und daraus gemeinsame Schlüsselworte gebildet werden.

Bei diesem Verfahren kann nicht festgestellt werden, ob die verschlüsselte Verbindung zu dem gewünschten Kommunikationspartner oder zu einem Gegner aufgebaut wird.

Kryptographische Verfahren können nicht nur zu Geheimhaltung, sondern auch zur Authentifizierung von Nachrichten eingesetzt werden. Die Verschlüsselung einer Nachricht unter Verwendung eines Schlüsselwortes beinhaltet im Prinzip auch deren Authentizität, da ein Gegner ohne Kenntnis des Schlüsselwortes den Klartext der Nachricht nicht erzeugen kann.

Bei einem asymmetrischen Kryptosystem wird für die Verschlüsselung einer Nachricht ein anderes Schlüsselwort verwendet, als für die Entschlüsselung. Ein solches System mit einem öffentlichen und einem privaten Schlüssel wird auch als Public Key System bezeichnet. Das bekannteste Beispiel für das Public Key System ist das sogenannte RSA-Verfahren, dessen Grundzüge ebenfalls in der eingangs genannten Literaturstelle beschrieben sind.

Auf den ersten Blick wird das System der Schlüsselverteilung bei der Verwendung asymmetrischer Kryptosysteme weitgehend gelöst, da die öffentlichen Schlüssel problemlos über unsichere Datenkanäle ausgetauscht werden können. Dies ist aber nur richtig, solang man das Abhören als die einzige Gefährdung einer Kommunikationsverbindung betrachtet. Neben passiven Abhörversuchen muss man in den meisten Fällen aber auch mit der Möglichkeit aktiver Angriffe rechnen. Hierbei schaltet sich ein aktiver Gegner in die Datenverbindung zwischen zwei Teilnehmer ein. Ein solcher Angriff kann nur bei Verwendung von Authentifizierungsmaßnahmen erkannt werden. Hierzu beschreibt die WO-A-95 14283, daß im Rahmen einen Zertifizierung das zu zertifizierende Gerät auf Anforderung zusätzlich zu seinem öffentlichen Schlüssel seine Adresse übermittelt. Der Erfindung liegt die Aufgabe zugrunde, ein Verfahren anzugeben, durch das die an einem Datenaustausch beteiligten Schlüsselgeräte authentifiziert werden können.

Diese Aufgabe wird erfindungsgemäß durch die im Patentanspruch 1 angegebenen Merkmale gelöst.

Im Folgenden wird die Erfindung anhand eines Ausführungsbeispieles beschrieben. Bei der Beschreibung werden folgende Abkürzungen verwendet:

| | |
|---|---|
| E | Verschlüsselung |
| D | Entschlüsselung |
| A, B, X | Teilnehmer |
| AD | Administrator |
| p | öffentlicher Schlüssel |
| s | geheimer Schlüssel |
| pAD | Signaturschlüssel, entspricht dem öffentlichen Schlüssel p des Administrators AD |
| Z | Zertifikat, entspricht dem öffentlichen Schlüssel p, dem Namen und weiteren Angaben eines Teilnehmers X |
| S | Signatur |
| S(Z) | Signatur des Zertifikates Z |

Die Erfindung geht von einem Kryptoverfahren aus, bei dem alle Verschlüsselungsgeräte mit einem gemeinsamen Public Key Schlüssel ausgestattet sind. Dieser öffentliche Schlüssel pAD wird von einer vertrauenswürdigen Instanz, einem sogenannten Administrator AD vergeben. Hierdurch kann prinzipiell jedes Gerät mit jedem kommunizieren, wobei die teilnehmenden Geräte authentifiziert sind.

In an sich bekannter Weise ist jedem Schlüsselgerät individuell ein Zertifikat Z zugeordnet, praktisch eine Art Name für dieses Gerät. Daneben enthält das Zertifikat Z, bei der Verwendung des Public-Key-Systems, den öffentlichen Schlüssel pX des Teilnehmers oder Benutzers X.

Erfindungsgemäß werden Benutzergruppen gebildet, deren Geräte mit einem gemeinsamen, gruppenspezifischen Signaturschlüssel pAD ausgestattet werden. Dieser Signaturschlüssel pAD ist der öffentliche Schlüssel pAD des Administrators AD. Er kann direkt im Gerät, oder er kann in Form anderer Speichermedien, beispielsweise auf Chipkarte, gespeichert sein. Eine solche Benutzergruppe weist eine beschränkte Anzahl von Teilnehmern auf. Hierdurch ist die Verbreitung des Signaturschlüssels pAD eingeschränkt.

In an sich bekannter Weise kann beim Administrator AD zu einem Zertifikat Z(X) eines Benutzers X eine Signatur S(Z(X)) erzeugt werden. Dabei wird das Zertifikat Z(X) mit dem geheimen Schlüssels sAD des Administrators AD verschlüsselt.

$$S(Z(X)) = E(Z(X), sAD)$$

Diese Signatur S(Z(X)) wird ebenfalls im Schlüsselgerät des Benutzers X fest oder mobil gespeichert.

Der geheime und der öffentliche Schlüssel sAD, sX und pAD, pX des Administrators AD beziehungsweise der Teilnehmer X sind Teil des Public Key Systems, das beispielsweise durch die RSA-Algorithmen realisiert ist.

Der gruppenspezifische Signaturschlüssels pAD und die teilnehmerspezifische beziehungsweise gerätespezifische Signatur S(Z(X)) werden beispielsweise bei einer Ausgestaltung der Erfindung bei einer Erstinitialisierung auf das Schlüsselgerät geladen. Daneben ist im Schlüsselgerät das zugehörige Zertifikat Z (X) gespeichert. Diese Daten können auch an den entsprechenden Teilnehmer auf einer Chipkarte ausgehändigt werden. Für diese Vorgänge ist ein persönlicher Kontakt mit dem Administrator AD oder zumindest ein sicherer übertragungskanal zu ihm notwendig.

Zur gesicherten Kommunikation wird eine Verbindung zwischen den Teilnehmern A und B, das heißt zwischen den zugehörigen Schlüsselgeräten aufgebaut. Der Teilnehmer A überträgt zum Teilnehmer B das Zertifikat Z(A) und die Signatur S(Z(A)). Der Teilnehmer B kann unter Verwendung des Signaturschlüssels pAD, das heißt des öffentlichen Schlüssels p des Administrators AD, die Echtheit des Zertifikates Z(A), das heißt die Echtheit des Teilnehmers A verifizieren:

$$D(S(Z(A)),pAD)=D(E(Z(A),sAD),pAD)=Z(A)$$

Analog überprüft der Teilnehmer A den Teilnehmer B.

Ein potentieller Angreifer ist gruppenfremd, besitzt keine vom Administrator AD ausgestellte Signatur S, und kann daher zu keinem Teilnehmer dieser Gruppe eine Verbindung aufbauen,.

Bei einem Diebstahl werden die entsprechenden Geräte von der Benutzergruppe ausgeschlossen, so daß sie für einen Angreifer unbrauchbar werden. Hierzu ist bei einer möglichen Ausgestaltung der Erfindung im Schlüsselgerät eine Liste der zugelassenen Teilnehmer beziehungsweise der Schlüsselgeräte gespeichert. Es können die Identitäten der möglichen Schlüsselgeräte hinterlegt sein, und in den Verbindungsaufbau ist eine entsprechende Sicherheitsabfrage integriert.

## Patentansprüche

1. Verfahren zur Authentifizierung von Schlüsselgeräten unter Verwendung eines asymmetrischen Verschlüsselungsverfahrens, bei dem dem Schlüsselgerät ein geräteindividuelles Zertifikat Z zugeordnet wird,
   **dadurch gekennzeichnet,**
   **dass** jedem Schlüsselgerät ein gruppenspezifischer Signaturschlüssel pAD und eine gruppenspezifische Signatur S(Z) des Zertifikats Z zugeordnet wird, wobei eine Gruppe aus einer zahlenmäßig begrenzten Anzahl von Schlüsselgeräten besteht.

2. Verfahren nach Anspruch 1,
   **dadurch gekennzeichnet,**
   **dass** der Signaturschlüssel pAD und die Signatur S(Z) bei einer einmaligen Erstinitialisierung vergeben wird.

3. Verfahren nach Anspruch 1 oder 2,
   **dadurch gekennzeichnet,**
   **dass** die Gruppenzugehörigkeit durch Vergleich mit einer Liste ermittelt wird.

## Claims

1. Method for authentication of key devices using an asymmetric encoding procedure, wherein a device-specific certificate Z is allocated to the key device,
   **characterised in that**
   a group-specific signature code pAD and group-specific signature S(Z) of the certificate Z is allocated to each key device, a group consisting of a numerically limited number of key devices.

2. Method according to claim 1,
   **characterised in that**
   the signature code pAD and the signature S(Z) are issued in the context of a unique first initialisation.

3. Method according to claim 1 or 2,
   **characterised in that**
   group membership is determined by comparison with a list.

## Revendications

1. Procédé d'identification d'appareils à clé à l'aide d'un procédé de cryptage asymétrique dans lequel un certificat Z, spécifique à l'appareil, est attribué à l'appareil à clé, **caractérisé en ce qu'**à chaque appareil à clé, une clé de signature pAD, spécifique au groupe, et une signature S(Z), spécifique au groupe, du certificat Z, sont attribuées, moyennant quoi un groupe est constitué d'un nombre limité d'appareils à clé.

2. Procédé selon la revendication 1, **caractérisé en ce que** la clé de signature pAD et la signature S(Z) sont données lors d'une première initialisation.

3. Procédé selon la revendication 1 ou 2, **caractérisé en ce que** l'appartenance au groupe est déterminée par la comparaison avec une liste.